# EUROPÄISCHE PATENTSCHRIFT

(11) **EP 0 781 234 B1**
(45) Veröffentlichungstag und Bekanntmachung des Hinweises auf die Patenterteilung: **14.04.1999**
(21) Anmeldenummer: 95933362.6
(22) Anmeldetag: 12.09.1995
(51) Int. Cl.: B65D 8/02, B65D 43/06

(54) **DECKELFASS**
BARREL WITH LID
FUT A COUVERCLE

(30) Priorität: 15.09.1994 DE 9414955 U; 03.11.1994 DE 9417442 U
(43) Veröffentlichungstag der Anmeldung: 02.07.1997
(73) Patentinhaber: MAUSER-WERKE GmbH, D-50321 Brühl (DE)
(72) Erfinder: PRZYTULLA, Dietmar, D-50170 Kerpen (DE)
(86) Internationale Anmeldenummer: EP9503586
(87) Internationale Veröffentlichungsnummer: WO9608416

(56) Entgegenhaltungen:
- EP-A- 0 366 129
- EP-A- 0 504 650
- WO-A-91/12179
- DE-A- 4 220 339
- DE-A- 4 236 338
- DE-U- 8 631 318
- GB-A- 1 225 625
- US-A- 5 301 853

## Beschreibung

Die vorliegende Erfindung betrifft ein zylinderförmiges blasgeformtes Deckelfaß mit Faßdeckel und Spannringverschluß, bei dem der im Querschnitt U-förmige Spannring im Verschlußzustand mit seinem oberen Schenke den äußeren Deckelrand übergreift und mit seinem unteren Schenke in eine Einbuchtung in der oberen Faßwandung dicht unterhalb des oberen Faßrandes eingreift, bzw. eine im wesentlichen horizontal verlaufende Faßkante bzw. leicht schräg verlaufende Anlagefläche untergreift, welche die obere Begrenzung der Einbuchtung darstellt, deren Verlauf nach unten zum Übergang in den vollzylindrischen Teil der Faßwandung im wesentlichen konisch zunehmend ausgebildet ist, und wobei der übergriffene äußere Deckelrand, in Querschnittsbetrachtung eine nach unten offene U-Form aufweist, in welche eine Deckeldichtung eingelegt oder eingeschäumt ist, die auf einem etwas verbreitert ausgebildeten Faßmündungsrand in eine dichtende Auflage gelangt.

Ein derartiges Deckelfaß ist z. B. aus der Vorveröffentlichung US-A- 5 301 853 bekannt.
Bei Deckelfässern wird die Dichtwirkung des Faßdeckels auf der Faßmündung durch Erzielung von axialer Vorspannung auf die Deckel-Dichtung über die Spannring-Schenkelschrägen am Deckeloberrand und an der äußeren Faßkörper-Bordur (bzw. Einbuchtung) beim Zuspannen bzw. Schließen des Spannringes erzeugt.
An Deckelfässer, die für eine Verwendung z. B. in der chemischen Industrie zugelassen sind, werden bestimmte Anforderungen hinsichtlich ihrer Lager- und Transportsicherheit gestellt, die in besonderen Zulassungsprüfungen (z.B. Seitenfall = Mantelfall, Diagonalfall auf den Deckelrand, statische Innendruckprüfung, Stapelbelastbarkeit u.a.m.) getestet und überprüft werden. Bei bekannten bisherigen Kunststoff-Deckelfässern treten bereits bei Faßabstürzen aus vergleichsweise geringen Höhen von ca. 1,20 m - z.B. von der Ladefläche eines Lastwagens - Faßundichtigkeiten, insbesondere bei flüssigen Füllgütern, oder sogar ein völliges Abspringen des Faßdeckels auf.
Die vorliegende Erfindung geht von den Nachteilen bisher bekannter Deckelfässer aus, die insbesondere darin bestehen, daß :
a) bei axialem Innendruck auf den Faßdeckel (Schwalldruck beim Mantelfall eines mit Wasser befüllten Fasses oder bei hydraulischem Innendruck eines geschlossenen Fasses),
b) beim Fall eines verschlossenen, mit Wasser gefüllten Fasses flach auf die Seitenwandung (Mantelfall) und
c) beim Fall eines verschlossenen, mit Wasser befüllten Fasses diagonal auf die Deckelkante erfolgen verschiedene Reaktionen :
   - der Faßdeckel wird axial nach außen gedrückt,
   - der Spannring wird axial nach außen gezogen,
   - der Spannring (mitsamt Deckel und Faßmündungsbereich) wird im zentralen Auftreffpunkt abgeflacht,
   - der Spannring wird seitlich des Auftreffpunktes stark geknickt und in beiden Knickstellen in seiner U-Form aufgeweitet,
   - der Deckelrand versucht sich unter dem oberen Spannringschenkel herauszuziehen,
   - die Vorspannung auf die Dichtung wird reduziert und das Verschlußsystem wird undicht.
   Ein mit einem fluiden festen Füllgut (schweres Pulver wie z. B. Farbpigmente) befülltes Deckelfaß verhält sich entsprechend.
   Die bei den Deformationen auftretenden Belastungen müssen in jedem Falle von dem U-förmigen Spannring aufgenommen werden. Dabei werden die Schenkel in den Knickbereichen nach außen gedrückt (aufgeweitet). Sind die Belastungen auf die Schenke zu hoch, so führen sie zu bleibenden Deformationen, die Vorspannung auf die Dichtung wird dort reduziert und größere Aufweitungen führen zur Undichtigkeit bzw. Leckage des Fasses.
   Es ist also anzustreben, die Deformation des Spannringes, insbesondere das Aufweiten im U-Bereich durch konstruktive Maßnahmen, sowie am Faßmündungsbereich, am Faßdeckel und/oder Spannring zu reduzieren, bei gleichzeitiger Beibehaltung eines guten Handlings, d. h. leichtem Verschließen des Spannringes. Bei dem eingangs erwähnten gattungsgemäßen Deckelfaß (US-A- 5 301 853) soll dies durch Einbringung von flexiblen biegsamen Zonen im Bereich der Einbuchtung in der Faßwandung unterhalb des Spannringverschlusses erfolgen. Hier soll also durch einen Elastizitätsbereich unterhalb des Deckelverschlusses die auftretende Stoßenergie beim Absturz eines solchen Fasses verzehrt werden. Dies ist jedoch für eine axiale Druckbelastbarkeit der Fässer sehr nachteilig und schließt eine Übereinanderstapelung derartiger Fässer nahezu aus.

Es ist Aufgabe der vorliegenden Erfindung, ein Kunststoff-Deckelfaß mit Faßdeckel und Spannringverschluß anzugeben, das durch seine besondere Abstimmung der Einzelkomponenten aufeinander den Einsatz des gleichen Faßgreiferwerkzeuges (Papageienschnabel) ermöglicht, bzw. im befüllten Zustand mit dem gleichen Faßgreiferwerkzeug manipulierbar ist, wie es für moderne Kunststoff L-Ring Spundfässer oder normale Stahl-Spundfässer überall üblich und im Einsatz ist. Dabei soll das Deckelfaß durch Aussteifung der Einzelkomponenten insbesondere für einen Einsatz von flüssigen Füllgütern besonders geeignet sein, d. h., auch bei größeren Absturz- bzw. Fallhöhen noch flüssigkeitsdicht bleiben und eine ausgeprägt gute Stapelbelastbarkeit - auch bei Heißabfüllung der eingefüllten Füllgüter - aufweisen.

Diese Aufgabe wird erfindungsgemäß dadurch gelöst, daß
- der Faßdeckel unmittelbar hinter dem vom oberen Schenkel des Spannringverschlusses übergriffenen Deckelrand eine nach unten in den Faßkörper eingezogene umlaufende, im wesentlichen V-förmige Eingreifnut mit flachem Nutengrund zwischen einer im Durchmesser verkleinert ausgebildeten zentralen Deckelscheibe und dem Deckelrand aufweist,
- die innere Begrenzung der Eingreifnut durch ein schräg konisch nach oben verlaufendes Ringteil gebildet ist, an welches sich die flache Deckelscheibe anschließt,
- der Verlauf der Einbuchtung nach unten zum Übergang in den vollzylindrischen Teil der Faßwandung im wesentlichen flach konisch zunehmend ausgebildet ist, wobei
- der Übergang vom konischen Bereich in den vollzylindrischen Teil des Faßkörpers in einem Abstand von 80 mm bis 140 mm, vorzugsweise ca. 120 mm, von der oberen Stirnkante des Faßmündungsrandes angeordnet ist, und wobei
- der obere Faßrand der Faßmündung als Gegenlager bzw. Dichtfläche für die Deckeldichtung massiv ausgebildet ist und eine Breite (Dicke) von wenigstens der doppelten Wandstärke des Faßkörpers aufweist, wobei zusätzlich außen am Faßrand ein umlaufender Flanschrand mit einer radialen Erstreckung von ca. 3 bis 5 mm ausgeformt ist, wodurch die Breite der horizontalen Anlagefläche für den unteren Schenkel des Spannringes vergrößert wird.

Durch diese besondere erfindungsgemäße Ausbildung des oberen äußeren Bereiches des Deckelfasses wird einerseits der Einsatz bzw. die Anwendung von für Spundfässer allgemein üblichen Faßgreiferwerkzeugen ermöglicht, andererseits weist das erfindungsgemäße Deckelfaß auch bei Befüllung mit flüssigen Füllgütern eine erheblich verbesserte Flüssigkeitsdichtheit z. B. bei Faßabstürzen aus größeren Fallhöhen (ca. 1,8 m) oder bei den zuvor beschriebenen Zulassungsprüfungen auf.

In einer Ausgestaltungsvariante der Erfindung ist vorgesehen, daß der konische Verlauf der Faßwandung innerhalb der Einbuchtung unterhalb der horizontalen Anlagefläche für den unteren Schenkel des Spannringverschlusses zum Übergang in den vollzylindrischen Teil des Faßkörpers unter einem spitzen Winkel zwischen 15° und 30°, vorzugsweise ca. 18° bis 20°, zur Faßlängsachse erfolgt. Dadurch kann der Faßgreifer in üblicher Weise erst gegen den zylindrischen Faßkörper herangeführt und dann nach oben in die Einbuchtung gleitend angehoben werden, bis die untere Faßgreiferklaue an den unteren, auf der horizontalen Anlagefläche des Faßrandes aufliegenden Schenke des Spannringes stößt und durch den auftretenden Widerstand die obere Faßgreiferklaue automatisch einschwenkt und einklinkt, und das Deckelfaß fest ergriffen wird und transportabel ist.
Um einen sicheren Sitz des unteren Spannring-Schenkels sowie der dort ansetzenden Faßgreiferklaue zu gewährleisten, ist erfindungsgemäß vorgesehen, daß die radiale Tiefe der Einbuchtung, gemessen von der Verlängerungslinie des vollzylindrischen Teils des Faßkörpers zwischen 12 mm und 25 mm, vorzugsweise ca. 17 mm, beträgt. Dabei ist die leicht schräg verlaufende Faßkante, die als Anlagefläche für den unteren Schenke des Spannringes dient und die gleichzeitig die obere Begrenzung der Einbuchtung darstellt, in einem Abstand von ca. 10 mm bis 20 mm, vorzugsweise ca. 15 mm, vom oberen Faßrand in der Außenwandung des Faßkörpers ausgebildet. Ein festes Gegenlager für den Spannring wie auch für den angesetzten Faßgreifer wird weiterhin dadurch erreicht, daß der massive Faßmündungsrand mit seinem nach oben weisenden teilkreisförmigen glatten Bereich als Dichtfläche für die Deckeldichtung dienend, während des Blasformvorganges durch Anstauchen des thermoplastisch verformbaren Kunststoffmaterials der Faßwandung mittels Formschieber hergestellt ist, wobei außen unten am massiven Faßrand ein umlaufender, radial abstehender Flanschrand mit einer radialen Erstreckung von ca. 3 mm bis 5 mm ausgeformt ist, wodurch die Breite der horizontalen Auflagefläche für den unteren Schenke des Spannringes vergrößert wird.

Da das erfindungsgemäße Deckelfaß in seiner Leichtbauausführung für ein Fassungsvermögen von 35 US Gallonen (ca. 132,5 Liter) nur ein Faß(körper)gewicht von ca. 5,2 kg und für ein Fassungsvermögen von 55 US Gallonen (ca. 208,2 Liter) nur ein Faß(körper)gewicht von ca. 8,2 kg, sowie eine um ca. 15 % größere Öffnungsweite der oberen Faßmündung gegenüber einem üblichen bauchigen Deckelfaß der eingangs genannten Art aufweist, ist es hervorragend für einen Einsatz von granulatförmigen oder pastösen Füllgütern geeignet, für die heute vorwiegend noch Fiberdrums verwendet werden. In den USA werden vielfach auch Fiberdrums ggf. mit Inliner für flüssige Füllgüter verwendet. Aufgrund seiner hervorragenden Gas- und Flüssigkeitsdichtheit sowie nahezu vollständigen Restentleerbarkeit (bei aufgesetztem Deckel) durch den Restentleerungs-Deckelspund ist das erfindungsgemäße Leichtgewicht-Deckelfaß an Stelle bisher üblicher Fiberdrums auch für den Einsatz von flüssigen Füllgütern bestens geeignet.
Weitere Vorteile des erfingungsgemäßen Deckelfasses bestehen darin, daß es weitestgehend identische Abmessungen wie ein entsprechendes Kunststoff L-Ring Spundfaß oder Stahl-Spundfaß aufweist, wodurch es mit den gleichen Faßgreiferwerkzeugen (Papageienschnabel = Parrot beak) gehandhabt werden kann. Diese Deckelfässer können auch zusammen mit Spundfässern palletiert werden, ohne daß es zu sonst üblichen Platzverlusten durch dickbauchige Deckelfässer und unterschiedliche Höhenabmessungen kommt. Die Befüllung der Deckelfässer erfolgt durch den 2 Zoll-Spund (mit einer ca. 50,8 mm großen Öffnung) an den gleichen Abfüllanlagen wie für Spundfässer, da die Abmessungen und Anordnungen des Deckelspundes genau den relevanten Abmessungen des Spundfasses entsprechen.
Eine Rekonditionierung der Deckelfässer für eine Wieder- oder Mehrfachverwendung ist im Vergleich zu Spundfässern erheblich einfacher und efizienter, und auch eine spätere Entsorgung bereitet keinerlei Probleme, da das Kunststoffmaterial von Faßkörper und Faßdeckel sowie der Spannring, ob er nun aus Stahl oder ebenfalls aus Kunststoff besteht, restlos recycelt werden kann.
Die Erfindung sowie weitere vorteilhafte Ausgestaltungsvarianten werden nachfolgend anhand von in den Zeichnungen schematisch dargestellten Ausführungsbeispielen näher erläutert und beschrieben. Es zeigen :
- Figur 1: ein erfindungsgemäßes Deckelfaß mit Fußring in Seitenansicht,
- Figur 2: eine andere Ausführungsform des erfindungsgemäßen Deckelfasses,
- Figur 3: einen Konfigurationsvergleich zwischen einem üblichen bauchigen und einem erfindungsgemäßen zylinderförmigen Deckelfass,
- Figur 4: eine Schnittdarstellung durch den linken Randbereich eines erfindungsgemäßen Faßdeckels (US-Version),
- Figur 5: eine Schnittdarstellung durch den linken oberen Randbereich eines erfindungsgemäßen Deckelfasses,
- Figur 6: eine Schnittdarstellung durch den rechten oberen Randbereich eines erfindungsgemäßen Deckelfasses mit angesetzten Faßgreiferklauen,
- Figur 7: eine vergrößerte Schnittdarstellung durch den rechten oberen Randbereich eines erfindungsgemäßen Deckelfasses,
- Figur 8: ein weiteres erfindungsgemäßes Deckelfaß (ohne Fußring) in Seitenansicht mit Teilschnittdarstellung (Europa-Version),
- Figur 9: eine vergrößerte Darstellung des oberen Faßbereiches des Deckelfasses gemäß Fig. 8,
- Figur 10: einen linken oberen Faßbereich in Teilschnittdarstellung,
- Figur 11: den linken oberen Faßbereich gem. Fig. 10 in Vollschnittdarstellung,
- Figur 12: einen rechten oberen Faßbereich in Schnittdarstellung,
- Figur 13: einen linken oberen Faßbereich in Schnittdarstellung eines anderen Ausführungsbeispieles (US-Version) und
- Figur 14: einen linken oberen Faßbereich in Schnittdarstellung eines weiteren Ausführungsbeispieles (US-Version).

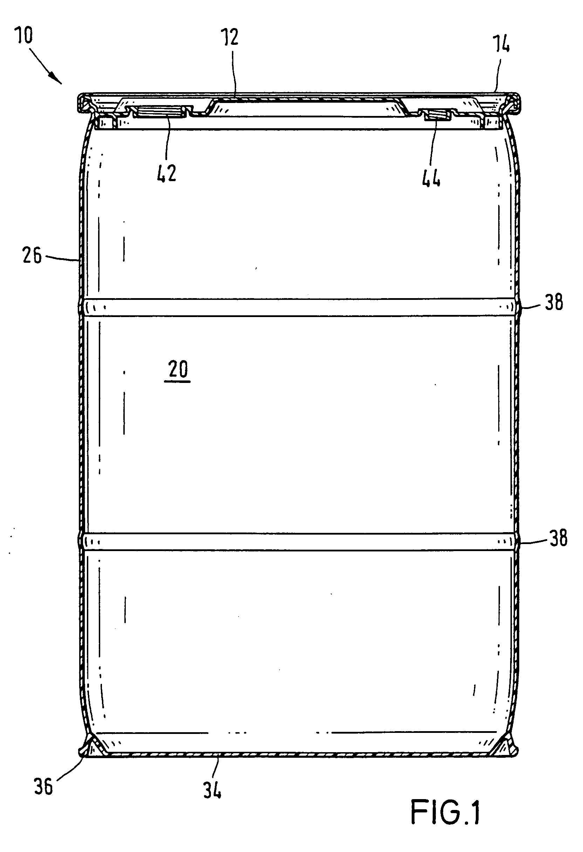

In Figur 1 ist mit der Bezugsziffer 10 ein erfindungsgemäßes Deckelfaß mit einem Fassungsvermögen von hier 55 US-Gallonen (ca. 208,2 Liter) bezeichnet, das mit einem aufgesetzten Faßdeckel 12 und einem Spannringverschluß 14 versehen ist. Etwa 80 % des Faßkörpers 20 sind vollzylindrisch ausgebildet, während etwa jeweils 10 % der Faßhöhe oben zum Faßmündungsrand 28 und unten zum Faßunterboden 34 hin leicht konisch verjüngend eingezogen sind. Im vollzylindrischen Teil 26 des Faßkörpers 20 sind in ein Drittel und zwei Drittel der Faßhöhe zwei vergleichsweise breite abgerundete Faßkörper-Rollringe 38 ausgebildet. In dem konisch verjüngten Übergangsbereich zwischen vollzylindrischem Teil 26 des Faßkörpers 20 und flachem Faßunterboden 34 ist ein massiver Boden-Rollring 36 vorgesehen, der bündig mit dem Faßunterboden 34 abschließt. Der Boden-Rollring 36 weist unten einen trapezförmigen Querschnitt mit dünnerer Steganbindung an den Faßkörper 20 und einen nahezu gleichen Außendurchmesser auf wie der im Verschlußzustand aufgesetzte Spannring 14 und verleiht dem Deckelfaß 10 dadurch eine hervorragende Standfestigkeit, insbesondere bei Übereinanderstapelung mehrerer Fässer, und eine hohe Steifigkeit bzw. Widerstandsfähigkeit gegen Einbeulung bzw. Flachdrücken (Walkarbeit im Kunststoffmaterial) des unteren Faßrandes beim schrägen Abrollen eines befüllten Deckelfasses.

Das Faß mit einem Fassungsvermögen von 55 US-Gallonen (ca. 208,2 Liter) weist einen größten Durchmesser von ca. 578 mm und eine Höhe von ca. 898 mm auf (Höhe/Durchmesser-Verhältnis ca. 1,55). Eine erste abgewandelte Faßausführung mit identisch gleichen Durchmesserabmessungen, aber einem etwas kleineren Füllvolumen von 52,5 US-Gallonen (ca. 198,7 Liter) weist ein Höhe/Durchmesser-Verhältnis von ca. 1,49 auf, wobei die Faßhöhe mit aufgesetztern Spannring ca. 860 mm beträgt. Dieses Faß weist damit exakt genau die gleiche Höhenabmessung wie die in den USA vorhandenen üblichen Deckelfässer auf und kann daher zusammen mit diesen palletiert werden. Eine zweite abgewandelte Faßausführung mit identisch gleichen Durchmesserabmessungen, aber einem vergleichsweise kleineren Füllvolumen von nur 36 US-Gallonen (ca. 136,3 Liter) weist ein Höhe/ Durchmesser-Verhältnis von nur 1,06 auf, wobei die Faßhöhe mit aufgesetztem Spannring ca. 610 mm beträgt. Dieses Faß (das sogenannte "Stubby Drum") sieht so hoch wie breit aus und ist speziell für granulatförmige bzw. puderförmige Produkte wie z. B. Farbpigmente vorgesehen, wobei zur Entnahme aus dem Faß die Farbpigmente von Hand mit einer Kelle aus dem Faß "geschöpft" werden. Durch die geringe Höhe (ca. eine Armlänge) des Fasses ist es möglich, auch Restmengen aus dem unteren Faßbereich zu entnehmen, ohne kopfüber tief in das Faß hineinlangen und Staubpartikel einatmen zu müssen.

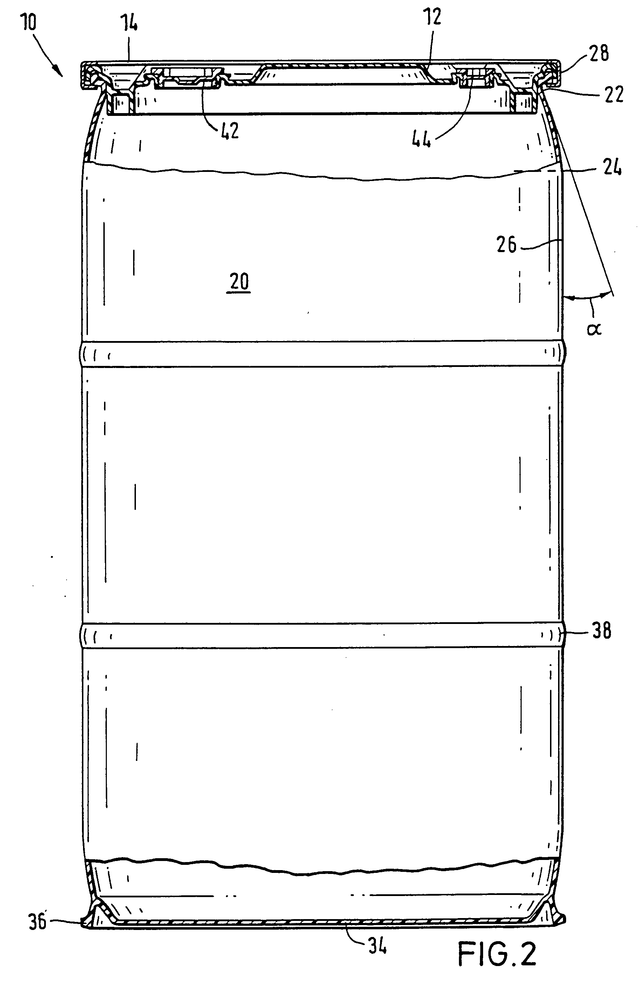

In Figur 2 ist als ein bevorzugtes Ausführungsbeispiel ein schlankes Deckelfaß 10 mit einem Füllvolumen von 35 US-Gallonen (ca. 132,5 Liter) dargestellt. Dieses Deckelfaß weist eine Höhe von ca. 860 mm und einen größten Durchmesser an den Faßkörper-Rollringen 38 von ca. 475 mm auf. Das Höhe/Durchmesser-Verhältnis dieses Fasses beträgt ca. 1,82.
Eine hiervon abgewandelte Faßausführung mit identisch gleichen Durchmesserabmessungen, aber einem kleineren Füllvolumen von 30 US-Gallonen (ca. 113,6 Liter) weist demgegenüber ein Höhe/Durchmesser-Verhältnis von ca. 1,57 auf, wobei die Faßhöhe mit aufgesetztem Spannring ca. 745 mm beträgt. Die beiden durchmessergleichen Faßtypen (gemäß Fig. 1 und 2) mit lediglich unterschiedlichen Höhen können auf vorteilhafte Weise in einer einzigen Wechsel-Blasform hergestellt werden. Dazu braucht lediglich ein entsprechendes Verlängerungs-Ringstück in die Blasform eingesetzt (höheres Faß) oder herausgenommen (niedrigeres Faß) zu werden.
Das Besondere dieser Ausführungsvarianten besteht also darin, daß sie nahezu die gleichen Abmessungen aufweisen wie die in den USA üblichen Fiberdrums und mit den gleichen Faßgreiferwerkzeugen wie die üblichen Fiberdrums oder Spundfässer manipulierbar und handhabbar sind. Die neuartigen Deckelfässer in Leichtbauweise sind weiterhin kostengünstiger herzustellen als vergleichbare Fiberdrums und bereiten später keinerlei Entsorgungsprobleme, da sie voll recycelbar sind. Der Spannring kann ein üblicher Stahlblech-Verschlußring sein, er kann aber auch vollständig aus Kunststoff bestehen.
Bei Verwendung des erfindungsgemäßen Deckelfasses für flüssige Füllgüter ist der Faßdeckel 12 wenigstens mit einer Spundöffnung, vorzugsweise mit zwei seitlichen sich gegenüberliegend angeordneten, verschließbaren Spundöffnungen ausgestattet, wobei ein größere Spund 42 eine 2-Zoll (ca. 50,8 mm) Öffnung und ein kleinerer Spund 44 eine 3/4-Zoll (ca. 19,1 mm) Öffnung aufweisen kann. Aus Fig. 2 wird auch deutlich, daß der konische Verlauf der Faßwandung innerhalb der Einbuchtung 22 unterhalb der horizontalen Anlagefläche 18 für den unteren Schenkel des Spannringverschlusses 14 zum Übergang 24 in den vollzylindrischen Teil 26 des Faßkörpers 20 unter einem spitzen Winkel a zwischen 15° und 30°, vorzugsweise ca. 18° bis 20°, erfolgt. Diese Konfiguration gewährleistet eine hohe Steifigkeit gegen Stapelbelastungen.

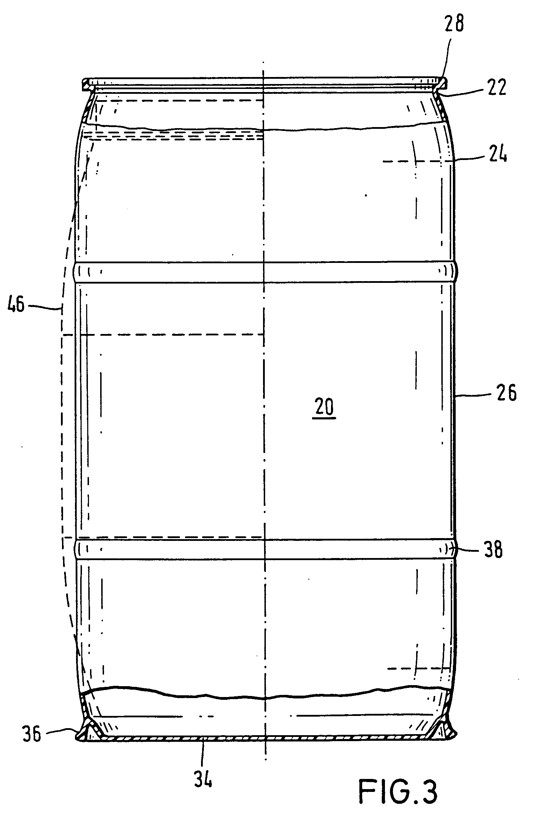

In Figur 3 ist in der linken Zeichnungshälfte in gestrichelter Ausführung ein bisher übliches bauchiges Standard-Deckelfaß bzw. dessen Faßkörper 46 im Vergleich zu dem erfindungsgemäßen Faßkörper 20 eingezeichnet. Daraus wird die verbesserte Standfestigkeit des schlankeren erfindungsgemäßen Deckelfasses deutlich.
Weiterhin ist ersichtlich, daß bei dem bauchigen Faßkörper der vollzylindrische Teil lediglich ca. ein Drittel (1/3) der gesammten Faßkörperhöhe beträgt, während der vollzylindrische Teil 26 bei dem erfindungsgemäßen Faßkörper mehr als drei Viertel (3/4) der gesamten Faßkörperhöhe ausmacht. Daduch ergibt sich, insbesondere auch durch den stabilen Boden-Rollring 36, in vorteilhafter Weise eine bessere Palletierbarkeit der Fässer bei gleichzeitig verbesserter Standfestigkeit und Abrollbarkeit in schräg geneigter Faßpositionierung.

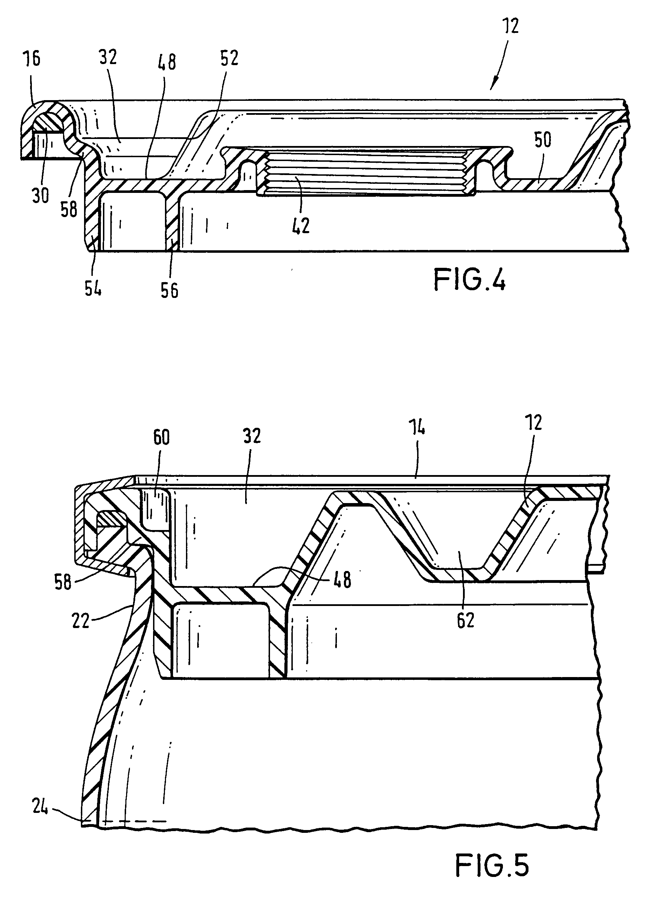

In Figur 4 ist der linke Randbereich eines erfindungsgemäßen Faßdeckels 12 in Querschnittsdarstellung gezeigt. In den nach unten offenen U-förmigen Deckelrand 16 ist eine Deckeldichtung 30 eingelegt bzw. eingeschäumt. Zwischen dem Deckelrand 16 und der nahezu bündig in gleicher Höhe angeordneten zentralen flachen Deckelscheibe 80 ist eine ca. 25 mm tiefe Eingreifnut 32 ausgebildet. Die Eingreifnut 32 weist einen flachen Nutengrund 48 auf, der sich wenigstens 10 mm, vorzugsweise
ca. 15 mm, radial einwärts eben erstreckt. Aus dem Nutengrund 48 erhebt sich innenseitig ein schräg konisches Ringteil 52 als Anschlußstück zu der oberen flachen Deckelscheibe 80 hin.
Auf der unteren Seite des Faßdeckels 12 sind unterhalb der Eingreifnut 32 im äußeren Randbereich zwei sich ca. 20 mm lang (axial) erstrechende Ringflansche 54 56 ausgebildet. Die Ringflansche 54, 56 sind ca. 20 mm voneinander beabstandet und dienen zur Erhöhung der Steifigkeit des Faßdeckels 12. Weiterhin erkennbar ist der in einem eingesenkten Spundgehäuse 50 angeordnete 2 Zoll-Spund 42. Von besonderer Bedeutung ist ein zwischen U-förmigem Deckelrand 16 und Nutengrund 48 ausgebildetes Zwischenstück bzw. Verbindungsstück 58, das vom Deckelrand 16 ausgehend nach innen abgekröpft oder abgewinkelt ist. Dieses abgekröpfte Verbindungsstück 58 oder das äußere axiale Ringstück 54 kommt bei aufgesetztem Faßdeckel 12 an der der äußeren Einbuchtung 22 gegenüberliegenden Innenwandung des Faßkörpers 20 zur Anlage und erhöht durch die gegenseitige Abstützung die Stapelbelastbarkeit des Deckels bzw. Deckelfasses.

In Figur 5 ist ein entsprechender Teilschnitt durch den linken oberen Randbereich eines erfindungsgemäßen Faßdeckels 12 gezeigt, allerdings seitlich außerhalb eines Spundes bzw. Spundgehäuses. Hier sind oberhalb des abgekröpften Verbindungsstückes 58 sich innen an den U-förmigen Deckelrand 16 anschließende Radial-Rippen 60 ausgebildet. Die Radial-Rippen 60 sind in einer Vielzahl mit geringem seitlichen Abstand von ca. 5 mm bis 10 mm zueinander vorgesehen.
Weiterhin ist bei dieser Ausführungsform des Faßdeckels 12 radial einwärts hinter der Eingreifnut 32 eine zweite umlaufende nach oben offene V-förmige Nut 62 mit vorzugsweise gerundetem Nutengrund im Außenbereich der flachen Deckelscheibe 80 vorgesehen. Diese Nut 62 wird nur durch das (oder die) eingesenkten Spundgehäuse unterbrochen und verbessert die Elastizität des Deckels gegen inneren Überdruck und den bei einem Faßabsturz auftretenden Schwalldruck.

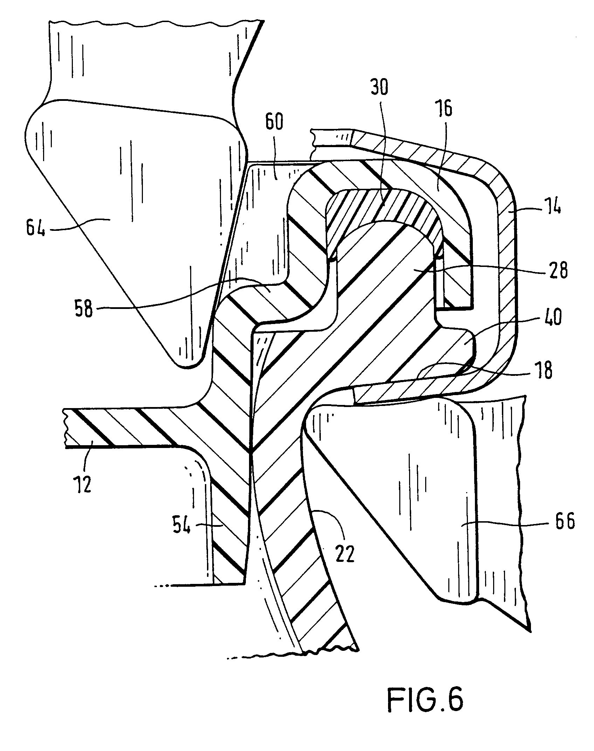

In Figur 6 ist weiterhin der obere rechte Randbereich eines erfindungsgemäßen Deckelfasses mit angesetzten Faßgreiferklauen 64, 66 dargestellt. Für die Leichtbau-Faßausführung ist es erforderlich, daß insbesondere der Faßdeckel und der Faßöffnungsbereich exakt aufeinander abgestimmt sind. Dazu gehört u. a., daß für einen sicheren Ansatz der unteren Faßgreiferklaue 66 die radiale Tiefe der Einbuchtung 22 - gemessen von der Verlängerungslinie des vollzylindrischen Teils des Faßkörpers - zwischen 12 mm und 25 mm, vorzugsweise ca. 17 mm, beträgt.
Die Breite der horizontalen Auflagefläche für den unteren Schenke des Spannringes 14 bzw. die Anlagefläche für die Faßgreiferklaue 66 wird noch dadurch vergrößert, daß der massive Faßmündungsrand 28 während des Blasformvorganges mittels Formschieber durch Anstauchen des thermoplastisch verformbaren Kunststoffmaterials der Faßwandung derart hergestellt ist, daß außen unten am Faßrand 28 ein umlaufender kleiner Flanschrand 40 mit einer radialen Erstreckung von ca. 3 bis 5 mm nach außen ausgeformt ist.
In Fig. 6 ist weiterhin erkennbar, daß der nach oben weisende Bereich des massiven Faßmündungsrandes 28 mit einer Höhe von ca. 8 mm nach oben als Dichtfläche für die Deckeldichtung 30 einen glatten teilkreisförmigen Querschnitt aufweist. Durch eine besondere Ausbildung der Formschieber in der Blasform wird gewährleistet, daß diese nach oben weisende, der Deckeldichtung 30 genau gegenüberliegende Dichtfläche des angestauchten massiven Faßmündungsrandes 28 frei von Faltungen und Schweißnähten des angestauchten Kunststoffmaterials bleibt. Diese Faltungen und Schweißnähte werden nach außen verlagert und sind vorteilhafterweise in dem äußeren Flanschrand 40 angeordnet, wo sie nicht weiter stören. Um den Eigriffsbereich der oberen Faßgreiferklaue 64 zu verbessern, können oberhalb des abgekröpften Verbindungsstückes 58 hinter dem U-förmigen Deckelrand 16 eine Vielzahl von Radial-Rippen 60 vorgesehen sein.

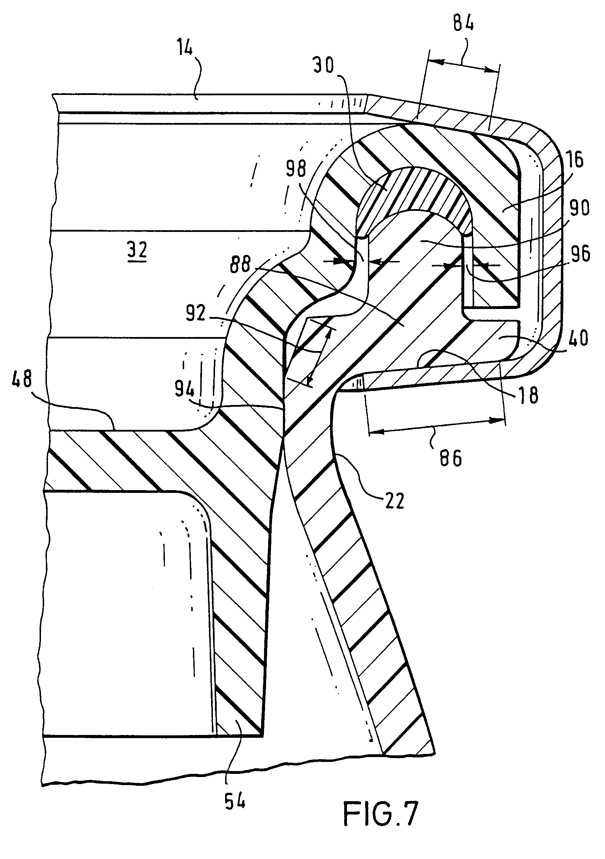

Zur Verdeutlichung wichtiger erfindungsgemäßer Merkmale zeigt Figur 7 noch einmal in detailierter Darstellung den rechten oberen Faßbereich eines Deckelfasses. Ganz wichtige konstruktive Merkmale bestehen insbesondere darin :
- Oben am Deckelrand ist eine ca. 6 mm bis 12 mm, vorzugsweise 8 mm, breite leicht schräg angepaßte Auflagefläche 84 (durch Pfeil gekennzeichnet) für den oberen Schenkel des Spannringverschlusses 14 ausgebildet. Dadurch wird verhindert, daß sich der Deckelrand z. B. bei einem Faßabsturz in den Knickbereichen nach außen unter den Spannring schieben kann und die Deckeldichtung entlastet wird.
- Durch den am unteren Außenrand der Faßkörpermündung nach außen vorstehenden bzw. vorspringenden Flanschrand 40 wird für den unteren leicht schrägen Schenkel des Spannringes 14 eine vergrößerte Auflagefläche 18 von wenigstens 10 mm geschaffen. Die Auflagefläche ist (in Radialrichtung) vorzugsweise sogar 15 mm (Pfeil 86) breit. Dies ist auch vorteilhaft für ein sicheres Ergreifen des Fasses mit der unteren Klaue des Faßgreiferwerkzeuges (Papageienschnabel).
   Der Nutengrund 48 der äußeren umlaufenden Eingreifnut 32 ist in gleicher Höhe wie oder sogar ein wenig unterhalb des unteren Schenkels des Spannringes 14 angeordnet. Dadurch kann die obere Klaue des Faßgreifers tief nach unten in die Eingreifnut 32 eingreifen und das Deckelfaß sicher fixieren.
- Der vom Spannring 14 übergriffene Faßkörperrand ist im wesentlichen wie ein über Kopf stehendes T mit einem horizontal verlaufenden Steg 88 und einem etwa mittig darauf angeordneten, nach oben weisenden vertikalen Steg 90 ausgebildet, wobei die nach oben weisende Fläche des vertikalen Steges 90 teilkreisförmig (Radius 4,5 mm) gerundet ist und die mit der Deckeldichtung 30 in Berührung kommende Dichtfläche des Faßkörperrandes darstellt. Ein nach außen weisendes Teilstück des horizontalen Steges 88 wird durch den radial nach außen vorspringenden Flanschrand 40 dargestellt. Das nach innen weisende Teilstück des horizontalen Steges schließt sich an die nach unten weglaufende Faßkörperwandung an. In dem Übergangsbereich von dem nach innen weisenden Teilstück zu der nach unten verlaufenden Faßwandung ist die Schnittstelle bzw. durch einen Pfeil 92 gekennzeichnete Schnittfläche des abgeschnittenen Butzenstückes (Abfallstück vom Blasformvorgang) angeordnet. Die Schnittfläche kann senkrecht oder - wie dargestellt
- leicht schräg nach unten innen verlaufen. Direkt unterhalb der Schnittfläche befindet sich ein Kontaktbereich 92 der Faßinnenwandung mit der Außenfläche des Faßdeckels bzw. der Verlängerung des äußeren Deckelringsteges 54. Im Kontaktbereich 92 befindet sich der engste Durchmesser der Faßkörpermündung, der hier ca. 2 bis 4 mm geringer ist als an der Schnittfläche des Butzenstückes. Beim Einsetzen des Deckels gleitet der äußere Deckelringsteg 54 in das Faßinnere und es erfolgt im Kontaktbereich 92 eine radiale Zentrierung und Abstützung des Deckels an der Faßinnenwandung unterhalb der Schnittfläche vom Butzenstück. Wenn manche Faßkörper z. B. durch Schrumfpspannungen leicht oval verzogen sind, erfolgt hier ein zentrierender Ausgleich im Faßmündungsbereich, wodurch eine gleichmäßige Positionierung und ein exakter Sitz der nach oben weisenden Dichtungfläche des vertikalen Steges 90 gegen die Deckeldichtung 30 gewährleistet ist. Eine derartige Zentrierung kann mit herkömmlichen Faßdeckeln, die nicht ein Stück ins Faßinnere hineinragen und dort in Kontakt mit der Faßinnenwandung gelangen, nicht erreicht werden. Durch eben diese Zentrierung ist es möglich, die Breite des vertikalen Steges 90 ( 8 mm breit, ca. 9 mm hoch) derart genau auf die innere Weite (ca. 10 mm) des nach unten offenen U-förmigen Deckelrandes einzustellen, daß außenseitig wie innenseitig des vertikalen Steges 90 exakte seitliche Abstandsspalte 96, 98 (durch Pfeile gekennzeichnet) von 1 mm Breite verbleiben. So ist sichergestellt, daß der vertikale Steg 90 mit der glatten gewölbten Dichtungsfläche immer mittig auf den Dichtungsring 30 trifft.
Das erfindungsgemäße Deckelfaß zeichnet sich weiterhin dadurch aus, daß der größte Außendurchmesser des Faßdeckels 12 gleich groß ist wie der Außendurchmesser an dem radial nach außen vorspringenden Flanschrand 40 (beide schließen bündig zueinander ab), wobei der Abstand der Stirnfläche des äußeren nach unten weisenden Schenkels des nach unten offenen U-förmigen Deckelrandes zur der nach oben weisenden Seitenfläche des radial nach außen vorspringenden Flanschrandes 40 am Faßmündungsrand bei aufgesetztem Deckel mit geschlossenem Spannringverschluß nur ca. 1 mm beträgt. Hierdurch ist sichergestellt, daß beim Aufsetzen von Stapelbelastung die Deckeldichtung 30 lediglich um diesen 1 mm nachzugeben braucht, danach gelangt der äußere Schenkel des Deckelrandes in Kontakt mit dem nach außen vorspringenden Flanschrand 40 und stützt sich hierauf ab, so daß eine Über-beanspruchung der Dichtung 30 vermieden ist.

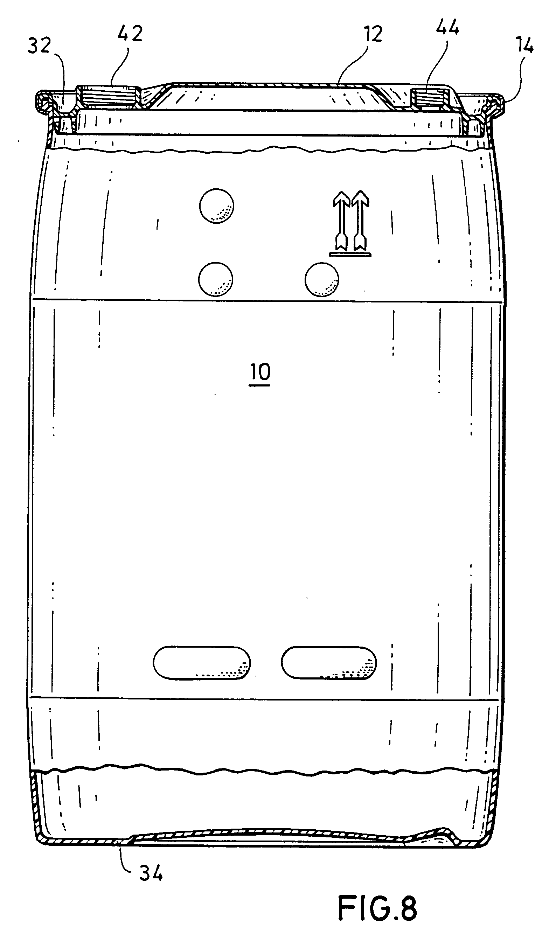

Ein weiteres erfindungsgemäßes Deckelfaß (Europa-Version) ohne Fußring mit einem Fassungsvermögen von 220 Litern ist in Figur 8 dargestellt, das mit aufgesetztem Faßdeckel 12 und Spannringverschluß 14 ein Faßgewicht von lediglich ca. 8 kg aufweist. Das Kunststoffmaterial des Faßkörpers besteht aus hochmolekularem Polyethylen (HD-PE). Der scheibenförmige Oberboden des Faßdeckels 12 ragt bei diesem Ausführungsbeispiel über den nach unten offenen U-förmigen Deckelrand 16 bzw. den diesen übergreifenden oberen Schenkel des Spannringes 14 hinaus. Die Höhe des Überstandes beträgt etwa zwei bis fünfmal die Wandstärke bzw. Dicke des Faßdeckels, vorzugsweise ca. 10 mm. Dies dient der Verbesserung der Langzeitstapeleigenschaften durch definierten inneren Druckaufbau. In einer abgewandelten Ausführungsform kann das Deckelfaß unten mit einem Fußring bzw. Boden-Rollring ausgestattet sein, der dann in einer Ebene mit dem Unterboden fluchtet bzw. dazu bündig ist.

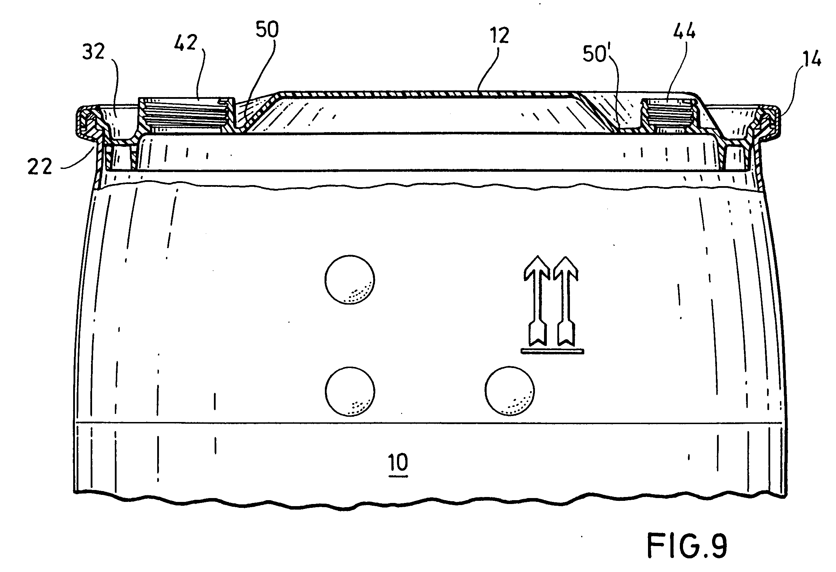

In Figur 9 ist der Faßdeckel 12 mit den zwei seitlichen, in Spundmulden 50, 50' versenkt angeordneten Spunden 42, 44 besser zu erkennen. Der (linke) 2 Zoll-Spund 42 ist für die Befüllung sowie für die Entnahme des Füllgutes mittels eingesetztem Saugrohr vorgesehen. Weiterhin ist dieser Spund 42 durch die benachbarte Abschrägung des Deckeloberbodens als Restentleerungsspund ausgebildet. Der kleinere 3/4 Zoll-Spund 44 kann zur Belüftung des Fasses beim Befüll- oder Entnahmevorgang geöffnet werden.
Als weiteres ganz wesentliches Merkmal ist hier ersichtlich, daß unterhalb der V-förmigen Eingreifnut 32 auf der Innenseite des Faßdeckels 12 die zwei voneinander beabstandeten umlaufenden Ringstege 54, 56 ausgebildet sind. Der äußere Ringsteg 54 liegt an der inneren Faßwandung an. Die Ringstege 54, 56 sind etwa 10 mm bis 30 mm, vorzugsweise ca. 20 mm, voneinander beabstandet und erstrecken sich über eine Länge von etwa 20 mm in Axialrichtung in das Faß hinein. Das Besondere dieser Ausführungsvariante eines Deckelfasses besteht nun darin, daß es nahezu identisch die gleichen Abmessungen aufweist wie ein entsprechendes geschlossenes L-Ring Spundfaß, das in der chemischen Industrie in Europa zur Zeit üblich und gebräuchlich ist, so daß das neuartige Deckelfaß zusammen mit üblichen Spundfässern palletierbar ist und mit den gleichen Faßgreiferwerkzeugen wie die üblichen Spundfässer manipulierbar und handhabbar ist. Die neuartigen Deckelfässer in Leichtbauweise sind weiterhin kostengünstig herzustellen und bereiten später keinerlei Entsorgungsprobleme, da sie voll recycelbar sind. Auch hier kann der Spannring 14 ein üblicher Stahlblech-Verschlußring sein, er kann aber auch vollständig aus Kunststoff bestehen.

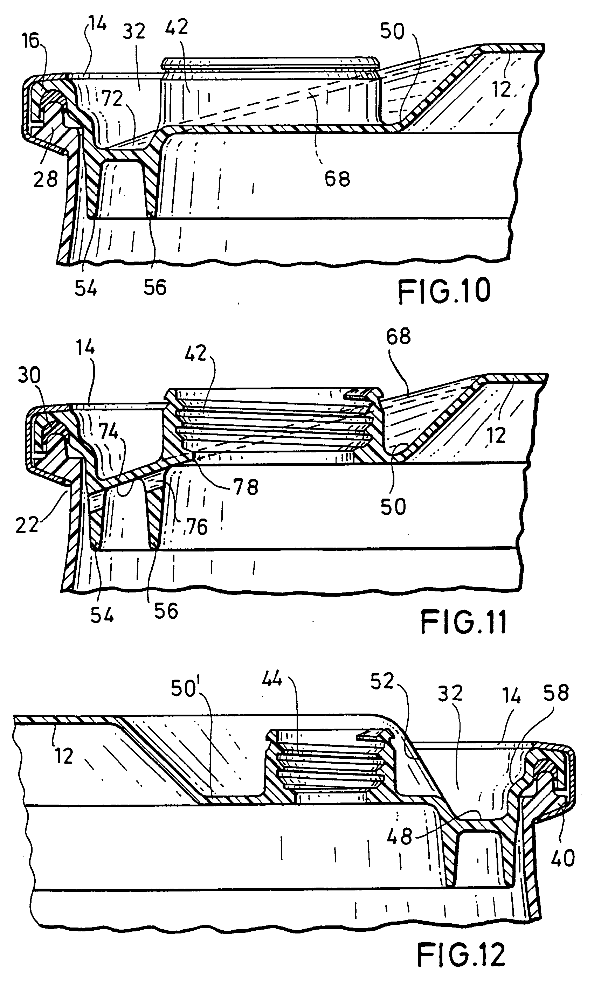

In Figur 10 ist der Faßdeckel 12 neben dem 2 Zoll-Spund 42 geschnitten. Beiderseits neben dem Spundgehäuse 50 ist der Oberboden des Faßdeckels 12 zum Deckelrand hin nach unten abgeschrägt ausgebildet. Die Abschrägung 68 reicht außenseitig bis an den Ansatz bzw. Anfang des inneren Ringsteges 56 bzw. bis an den inneren flachen Rand der Eingreifnut 32.
So kann die letzte Restflüssigkeit bei leichter Schrägstellung des Deckelfasses in Inversionspositionierung (Überkopf) zum tiefsten Punkt 78 am oberen Rand des inneren Ringsteges 56 bzw. am äußeren Rand des 2 Zoll-Spundes hinfließen bzw. durch das Spundloch aus dem Faßinneren herauslaufen.
Um auch ein Abfließen von Restflüssigkeit aus dem äußeren Deckelbereich bzw. aus dem Zwischenraum zwischen den beiden Ringstegen 54 und 56 zu ermöglichen, ist erfindungsgemäß vorgesehen, daß zumindest in dem inneren Ringsteg 56 direkt vor dem Auslaufspund 42 eine Bohrung 76 (oder eine breitere Queröffnung) eingebracht ist. In vorteilhafter Weise ist auch in dem äußeren Ringsteg 54 an gleicher Stelle eine entsprechende Bohrung vorgesehen, um das Abfließen von Restflüssigkeit aus dem Spalt zwischen innerer Faßwandung und dem äußeren Ringsteg 54 zu ermöglichen. Zweckmäßigerweise ist direkt vor dem Spund 42 von innen her betrachtet eine rinnenartige Vertiefung 74 ausgebildet, in welche die zum Spundloch führende Bohrung 76 im Ringsteg 56 einmündet. In der Eingreifnut 32 macht sich diese innere Ablaufrinne als schräg zum Spund nach oben verlaufende rückenartige Erhebung 72 bemerkbar.
Wie aus Figur 11 ersichtlich wird, verlaufen die Bohrungen 76 durch die Ringstege 54 und 56 schräg zum Spund hin und zwar mit einer steileren Neigung zum Spund hin als die Abschrägung 68 verläuft, so daß sich der tiefste Punkt 78 am äußeren Rand des Spundloches ergibt. Dies läßt sich deshalb so problemlos realisieren, weil der flache Nutengrund 48 der Eingreifnut 32 tiefer liegt als der Boden des Spundgehäuses 50. Der Nutengrund 48 liegt etwa ein bis zwei Wandstärken (ca. 3 mm bis 10 mm) des Faßdeckels tiefer als der Boden des Spundgehäuses.

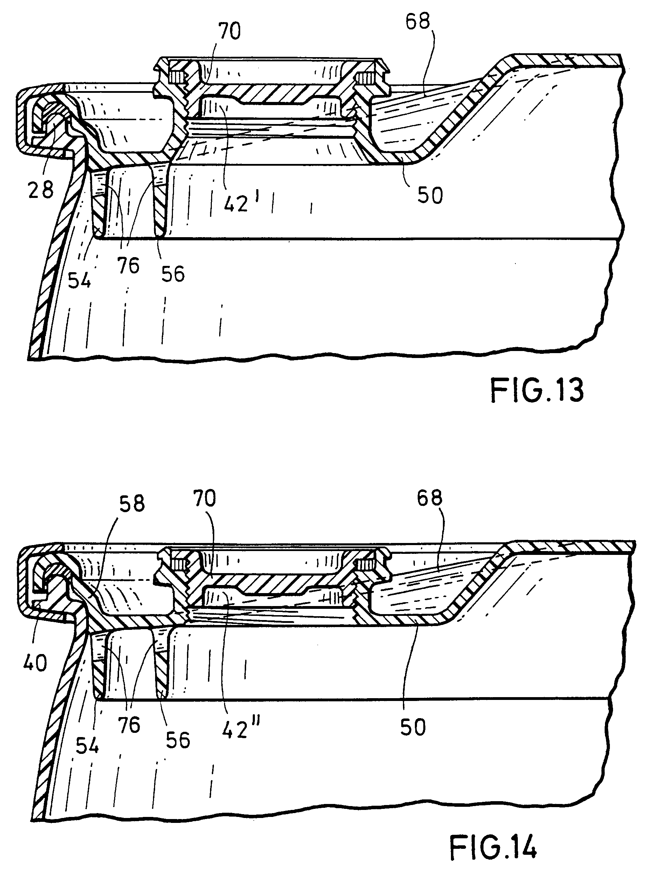

In Figur 12 ist weiterhin der rechte Randbereich eines erfindungsgemäßen Deckelfasses in Querschnittsdarstellung gezeigt. Wie auch aus den anderen Zeichnungsfiguren ersichtlich wird, ist in den nach unten offenen U-förmigen Deckelrand 16 die Deckeldichtung 30 eingelegt. Zwischen dem Deckelrand 16 und der erhöht ausgebildeten zentralen flachen Deckelscheibe ist die ca. 20 mm bis 40 mm tiefe Eingreifnut 32 ausgebildet. Die Eingreifnut 32 weist den flachen Nutengrund 48 auf, der sich ca. 15 mm radial einwärts eben erstreckt. Aus dem Nutengrund 48 erhebt sich (mit Ausnahme im Bereich der Spundgehäuse) das schräg konische Ringteil 52 als Anschlußstück zu der oberen flachen Deckelscheibe hin.
Auf der unteren Seite des Faßdeckels 12 sind im Außenbereich die zwei ca. 20 mm tief (axial) in den Faßkörper eintauchenden Ringflansche 54, 56 ausgebildet. Weiterhin erkennbar ist der in dem eingesenkten Spundgehäuse 50' angeordnete 3/4 Zoll-Spund 44. Grundsätzlich könnte auch hier die Restenleerungs-Deckelabschrägung ausgebildet sein.
In Figur 13 ist ein weiteres Ausführungsbeispiel eines erfindungsgemäßen Deckelfasses (US-Version) dargestellt. Hierbei ist der Auslaufspund 42' in der in den USA üblichen Ausführung mit oben am Spundstutzen abdichtendem Spundstopfen 70 ausgebildet - im Gegensatz zu der in Europa üblichen Ausführung des Spundstopfens, der im Spundstutzen unterhalb des Schraubgewindes an einer eingezogenen konischen Dichtfläche mit seinem Dichtungsring zur Anlage kommt und abdichtet.

Ein letztes Ausführungsbeispiel dargestellt in Figur 14 unterscheidet sich im wesentlichen von dem in Fig. 13 gezeigten Ausführungsbeispiel dadurch, daß der Oberboden bzw. die zentrale flache Deckelscheibe 80 des Faßdeckels bündig mit dem Deckelrand bzw. bündig mit dem oberen Schenke des Spannringes ausgebildet ist. Hierbei verläuft dann demzufolge die Abschrägung 68 des abgeflachten Deckelbereiches seitlich neben dem Auslaufspund entsprechend flacher.
Für die erfindungsgemäßen Leichtbau-Faßausführungen ist es erforderlich, daß insbesondere der Faßdeckel und der Faßöffnungsbereich exakt aufeinander abgestimmt sind. Die besondere Ausbildung des oberen Faßrandes 28 ist von wesentlicher Bedeutung. Dazu gehört, daß für einen sicheren Ansatz der unteren Faßgreiferklaue 66 die radiale Tiefe der Einbuchtung 22 -gemessen von der Verlängerungslinie des vollzylindrischen Teils des Faßkörpers- zwischen 12 mm und 25 mm, vorzugsweise ca. 17 mm, beträgt. Die Breite der leicht schräg verlaufenden Anlagefläche für den unteren Schenkel des Spannringes 14 bzw. die Anlagefläche für die Faßgreiferklaue 66 wird noch dadurch vergrößert, daß der massive Faßmündungsrand 28 während des Blasformvorganges durch Anstauchen des thermoplastisch verformbaren Kunststoffmaterials der Faßwandung mittels Formschieber derart hergestellt ist, daß außen unten am Faßrand 28 der umlaufende kleine Flanschrand 40 mit einer radialen Erstreckung von ca. 5 mm nach außen ausgeformt ist.
Der Faßmündungsrand 28 ist wie ein umgekehrtes "L" ausgebildet, welches zwischen seinem nach unten weisenden langen Schenke (= Faßwandung) und seinem im wesentlichen horizontal nach außen weisenden kurzen Schenkel einen Winkel von etwa 70° bis 85°, vorzugsweise ca 76°, einschließt. Der kurze nach außen weisende Schenkel ist auf seiner unteren Seite leicht schräg konisch ausgebildet d. h. er verjüngt sich nach außen hin. Die schräge Fläche dient als Anlagefläche für den unteren Schenkel des Spannringes, der durch die schräge Anlagefläche den Deckel mit der Deckeldichtung im Verschlußzustand auf den oberen Faßrand preßt. Dazu ist der kurze "L"-Schenkel auf seiner oberen Seite mit einem wulstartigen Vorsprung versehen, der oben eine glatte halbkreisförmige Dichtfläche aufweist. Dieser wulstartige Vorsprung greift in den U-förmigen Deckelrand ein und dichtet gegen die Deckeldichtung ab. Der nach unten weisende äußere Rand des U-förmigen Deckelrandes schließt nahezu bündig mit dem radial nach außen weisenden Flanschrand 40 des Faßmündungsrandes 28 ab, so daß auch bei überhöhter Stapelbelastung eine Überbeanspruchung der Deckeldichtung verhindert wird.
Der nach oben weisende halbkreisförmige Bereich des massiven Faßmündungsrandes 28 besitzt eine Höhe von wenigstens 10 mm und bildet die Dichtfläche für die Deckeldichtung 30. Durch eine besondere Ausbildung der Formschieber in der Blasform wird gewährleistet, daß die nach oben weisende Dichtfläche des angestauchten massiven Faßmündungsrandes 28 frei von Faltungen und Schweißnähten des angestauchten Kunststoffmaterials bleibt.
Für das Erreichen der vorteilhaften Eigenschaffen des erfindungsgemäßen Deckelfasses sind eine Vielzahl von aufeinander abgestimmte Details und Feinheiten wichtig, die in Kombination miteinander das Wesen dieses Deckelfasses ausmachen.

### Bezugsziffernliste

- **10**: Deckelfaß
- **12**: Faßdeckel
- **14**: Spannring(verschluß)
- **16**: Deckelrand (12)
- **18**: Faßkante (20) = schräge Anlagefläche für (14)
- **20**: Faßkörper (10)
- **22**: Einbuchtung (20)
- **24**: Übergang (22/26)
- **26**: vollzylindrischer Teil (20)
- **28**: Faß(mündungs)rand (20)
- **30**: Deckeldichtung
- **32**: Eingreifnut
- **34**: Faßunterboden
- **36**: Boden-Rollring
- **38**: Faßkörper-Rollring
- **40**: Flanschrand (28)
- **42**: 2"-Spund
- **44**: 3/4"-Spund
- **46**: übl. bauchiges Deckelfaß
- **48**: Nutengrund (32)
- **50**: Spundgehäuse
- **52**: konisches Ringteil (12)
- **54**: äußeres axiales Ringteil (12)
- **56**: inneres axiales Ringteil (12)
- **58**: abgekröpftes Verbindungsstück (12)
- **60**: Radial-Rippen (58/16)
- **62**: umlaufende innere V-Nut
- **64**: obere Faßgreiferklaue
- **66**: untere Faßgreiferklaue
- **68**: Abschrägung Faßdeckel
- **70**: Spundstopfen
- **72**: rückenartige Erhebung
- **74**: rinnenartige Vertiefung (Drainagekanal)
- **76**: Bohrung(Loch)
- **78**: tiefste Stelle
- **80**: zentrale flache Deckelscheibe
- **82**: konisches Ringteil
- **84**: schräge Auflagefläche
- **86**: Pfeil unterer Schenke
- **88**: horizontaler Steg
- **90**: vertikaler Steg
- **92**: Pfeil Schnittfläche
- **94**: Kontaktbereich
- **96**: äußerer Abstandsspalt
- **98**: innerer Abstandsspalt

## Patentansprüche

1. Zylinderförmiges blasgeformtes Deckelfaß (10) mit Faßdeckel (12) und Spannringverschluß (14), bei dem der im Querschnitt U-förmige Spannring (14) im Verschlußzustand mit seinem oberen Schenke den äußeren Deckelrand (16) übergreift und mit seinem unteren Schenke in eine Einbuchtung (22) in der oberen Faßwandung dicht unterhalb des oberen Faßrandes (28) eingreift, oder eine im wesentlichen horizontal verlaufende Faßkante oder leicht schräg verlaufende Anlagefläche (18) untergreift, welche die obere Begrenzung der Einbuchtung (22) darstellt, deren Verlauf nach unten zum Übergang (24) in den vollzylindrischen Teil der Faßwandung im wesentlichen konisch zunehmend ausgebildet ist, und wobei der übergriffene äußere Deckelrand (16) in Querschnittsbetrachtung eine nach unten offene U-Form aufweist, in welche eine Deckeldichtung (30) eingelegt oder eingeschäumt ist, die auf einem etwas verbreitert ausgebildeten Faßmündungsrand in eine dichtende Auflage gelangt, wobei im Faßdeckel (12) gegebenenfalls wenigstens eine seitlich in einem Spundgehäuse versenkt angeordnete Spundlochöffnung (42, 44) vorgesehen ist,
**dadurch gekennzeichnet**, daß
- der Faßdeckel (12) unmittelbar hinter dem vom oberen Schenke des Spannringverschlusses (14) übergriffenen Deckelrand (16) eine nach unten in den Faßkörper (20) eingezogene umlaufende, im wesentlichen V-förmige Eingreifnut (32) mit flachem Nutengrund (48) zwischen einer im Durchmesser verkleinert ausgebildeten zentralen Deckelscheibe und dem Deckelrand (16) aufweist,
- die innere Begrenzung der Eingreifnut (32) durch ein schräg konisch nach oben verlaufendes Ringteil (52) gebildet ist, an welches sich die flache Deckelscheibe anschließt,
- der Verlauf der Einbuchtung (22) nach unten zum Übergang (24) in den vollzylindrischen Teil der Faßwandung im wesentlichen flach konisch zunehmend ausgebildet ist, wobei
- der Übergang (24) vom konischen Bereich in den vollzylindrischen Teil des Faßkörpers (20) in einem Abstand von 80 mm bis 140 mm, vorzugsweise ca. 120 mm, von der oberen Stirnkante des Faßmündungsrandes (28) angeordnet ist, und wobei
- der obere Faßrand (28) der Faßmündung als Gegenlager und Dichtfläche für die Deckeldichtung (30) massiv ausgebildet ist und eine Breite (Dicke) von wenigstens der doppelten Wandstärke des Faßkörpers (20) aufweist, wobei zusätzlich außen am Faßrand ein umlaufender Flanschrand (40) mit einer radialen Erstreckung von ca. 3 bis 5 mm ausgeformt ist, wodurch die Breite der horizontalen Anlagefläche (18) für den unteren Schenkel des Spannringes (14) vergrößert wird.

2. Deckelfaß nach Anspruch 1,
**dadurch gekennzeichnet**, daß
der konische Verlauf der Faßwandung innerhalb der Einbuchtung (22) unterhalb der horizontalen Anlagefläche (18) für den unteren Schenkel des Spannringverschlusses (14) zum Übergang (24) in den vollzylindrischen Teil (26) des Faßkörpers (20) unter einem spitzen Winkel zwischen 15° und 30°, vorzugsweise ca. 18° bis 20°, zur Faßlängsachse erfolgt.

3. Deckelfaß nach Anspruch 1 oder 2,
**dadurch gekennzeichnet**, daß
die radiale Tiefe der Einbuchtung (22), gemessen von der Verlängerungslinie des vollzylindrischen Teils (26) des Faßkörpers (20) zwischen 12 mm und 25 mm, vorzugsweise ca. 17 mm, beträgt.

4. Deckelfaß nach Anspruch 1, 2 oder 3,
**dadurch gekennzeichnet**, daß
die leicht schräg verlaufende Faßkante (18), die als Anlagefläche für den unteren Schenkel des Spannringes (14) dient und die gleichzeitig die obere Begrenzung der Einbuchtung (22) darstellt, in einem Abstand Von ca. 10 mm bis 20 mm, vorzugsweise ca. 15 mm, vom oberen Faßrand (28) in der Außenwandung des Faßkörpers (20) ausgebildet ist.

5. Deckelfaß nach Anspruch 1, 2, 3 oder 4,
**dadurch gekennzeichnet**, daß
der nach oben weisende Bereich des massiven Faßmündungsrandes (28) bzw. der vertikale Steg (90) als Dichtfläche für die Deckeldichtung (30) einen glatten teilkreisförmigen Querschnitt aufweist.

6. Deckelfaß nach Anspruch 1, 2, 3, 4 oder 5,
**dadurch gekennzeichnet**, daß
der massive Faßmündungsrand (28) während des Blasformvorganges durch Anstauchen des thermoplastisch verformbaren Kunststoffmaterials der Faßwandung mittels Formschieber hergestellt ist.

7. Deckelfaß nach Anspruch 1, 2, 3, 4, 5 oder 6,
**dadurch gekennzeichnet**, daß
der Faßkörper (20) unten im Übergangsbereich von der zylindrischen Faßwandung in den Faßunterboden (34) einen umlaufenden massiven Boden-Rollring (36) mit unten trapezförmigem Querschnitt und schlanker Steganbindung an den Faßkörper (20) aufweist, wobei der Boden-Rollring (36) einen nahezu gleichen Außendurchmesser aufweist wie der im Verschlußzustand aufgesetzte Spannring (14).

8. Deckelfaß nach Anspruch 1, 2, 3, 4, 5, 6 oder 7,
**dadurch gekennzeichnet**, daß
es mit aufgesetztem Faßdeckel (12) und Spannringverschluß (14) für ein Fassungsvermögen von ca. 30 US Gallonen (ca. 113,6 Liter) ein Höhe/Durchmesser-Verhältnis von ca. 1,57 aufweist.

9. Deckelfaß nach einem der vorhergehenden Ansprüche 1 bis 7,
**dadurch gekennzeichnet**, daß
es mit aufgesetztem Faßdeckel (12) und Spannringverschluß (14) für ein Fassungsvermögen von ca. 35 US Gallonen (ca. 132,5 Liter) ein Höhe/Durchmesser-Verhältnis von ca. 1,82 aufweist.

10. Deckelfaß nach einem der vorhergehenden Ansprüche 1 bis 9,
**dadurch gekennzeichnet**, daß
alle Durchmesserabmessungen für ein 30 US Gallonen-Faß (ca. 113,6 Liter) gleichgroß sind wie für ein 35 US Gallonen-Faß, (ca. 132,5 Liter) wobei der größte Faßdurchmesser im Bereich der im vollzylindrischen Teil (26) der Faßwandung angeordneten beiden Faßkörper-Rollringe (38) ca. 474 mm beträgt.

11. Deckelfaß nach Anspruch 1, 2, 3, 4, 5, 6 oder 7,
**dadurch gekennzeichnet**, daß
es mit aufgesetztem Faßdeckel (12) und Spannringverschluß (14) für ein Fassungsvermögen von ca. 36 US Gallonen (ca. 136,3 Liter) ein Höhe/Durchmesser-Verhältnis von ca. 1,06 aufweist.

12. Deckelfaß nach Anspruch 1, 2, 3, 4, 5, 6 oder 7,
**dadurch gekennzeichnet**, daß
es mit aufgesetztem Faßdeckel (12) und Spannringverschluß (14) für ein Fassungsvermögen von ca. 52,5 US Gallonen (ca. 198,7 Liter) ein Höhe/Durchmesser-Verhältnis von ca. 1,49 aufweist.

13. Deckelfaß nach wenigstens einem der vorhergehenden Ansprüche 1 bis 7,
**dadurch gekennzeichnet**, daß
es mit aufgesetztem Faßdeckel (12) und Spannringverschluß (14) für ein Fassungsvermögen von ca. 55 US Gallonen (ca. 208,2 Liter) ein Höhe/Durchmesser-Verhältnis von ca. 1,55 aufweist.

14. Deckelfaß nach wenigstens einem der vorhergehenden Ansprüche 1 bis 7,
**dadurch gekennzeichnet**, daß
alle Durchmesserabmessungen für ein 36 US Gallonen-Faß (ca. 136,3 Liter) gleichgroß sind wie für ein 52,5 oder 55 US Gallonen-Faß, (ca. 198,7 oder ca. 208,2 Liter)
wobei der größte Faßdurchmesser im Bereich der im vollzylindrischen Teil (26) der Faßwandung angeordneten beiden Faßkörper-Rollringe (38), bzw. im Bereich des Spannringes (14) und des Boden-Rollringes (36) ca. 474 mm beträgt.

15. Deckelfaß nach wenigstens einem der vorhergehenden Ansprüche 1 bis 13,
**dadurch gekennzeichnet**, daß
der vollzylindrische Teil (26) des Faßkörpers (20) wenigstens drei Viertel der Gesamthöhe des Deckelfasses (10) beträgt.

16. Deckelfaß nach wenigstens einem der vorhergehenden Ansprüche 1 bis 15,
**dadurch gekennzeichnet**, daß
der konische Verlauf der Faßwandung innerhalb der unteren Einbuchtung oberhalb des Bodenrollringes (36) zum Übergang nach oben in den vollzylindrischen Teil (26) des Faßkörpers (20) unter einem spitzen Winkel zwischen 15° und 30°, vorzugsweise ca. 18° bis 20°, erfolgt.

17. Deckelfaß nach wenigstens einem der vorhergehenden Ansprüche 1 bis 16,
**dadurch gekennzeichnet**, daß
der Oberboden des Faßdeckels (12) zu beiden Seiten symmetrisch seitlich neben dem Spund (42) bzw. dem Spundgehäuse (50) abgeschrägt ausgebildet ist, wobei die Abschrägung (68) von dem hochgezogenen zentralen scheibenförmigen Deckelteil außenseitig bis an den Ansatz bzw. Anfang eines inneren Ringsteges (56) bzw. bis an den inneren flachen Rand der Eingreifnut (32) reicht.

18. Deckelfaß nach wenigstens einem der vorhergehenden Ansprüche 1 bis 17,
**dadurch gekennzeichnet**, daß
auf der unteren Seite des Faßdeckels (12) in seinem Außenbereich zwei voneinander beabstandete Ringflansche (54, 56) ausgebildet sind, wobei der Abstand voneinander ca. 10 mm bis 30 mm, vorzugsweise ca. 18 mm beträgt, und die axiale Erstreckung der Ringflansche (54, 56) in den Faßkörper (20) hinein ebenfalls ca. 10 mm bis 30 mm, vorzugsweise ca. 18 mm beträgt.

19. Deckelfaß nach Anspruch 18,
**dadurch gekennzeichnet**, daß
in dem inneren Ringflansch (56) oder/und in dem äußeren Ringflansch (54) direkt vor dem Auslaufspund (42) eine Bohrung (76) eingebracht ist.

20. Deckelfaß nach Anspruch 19,
**dadurch gekennzeichnet**, daß
die Bohrungen (76) durch die Ringflansche (54, 56) schräg zum Spund (42) hin verlaufen und zwar mit einer steileren Neigung zum Spund hin als die Abschrägung (68) verläuft, so daß sich der tiefste Punkt (78) in Überkopf-Entleerungsposition am äußeren Rand des Spundloches ergibt.

21. Deckelfaß nach wenigstens einem der vorhergehenden Ansprüche 1 bis 20,
**dadurch gekennzeichnet**, daß
in Überkopf-Entleerungsposition betrachtet direkt vor dem Spund (42) innenseitig eine radial schräg nach unten zum Spundloch hin verlaufende rinnenartige Vertiefung (74) als Drainagekanal ausgebildet ist, in der die zum Spundloch führende Bohrung (76) durch den inneren Ringsteg (56) vorgesehen ist.

## Claims

1. A cylindrical blow-moulded barrel (10) with a lid (12) and a clamping-ring closure (14), in which the upper arm of the clamping ring (14) of U-shaped cross-section engages in the closed state over the outer lid rim (16) and the lower arm thereof engages in a recess (22) in the upper barrel wall closely below the upper barrel rim (28), or engages under a barrel edge extending substantially horizontally or an abutment face (18) extending slightly obliquely and forming the upper boundary of the recess (22), the outline of which extends outwards in a substantially conical manner downwards towards the transition (24) into the completely cylindrical part of the barrel wall, wherein the overlapped outer lid rim (16) has a U-shape open at the bottom as viewed in cross-section, into which a lid seal (30) is inserted or set in foam which comes to rest in a sealed manner against a slightly enlarged rim of the barrel mouth, wherein at least one bung-hole opening (42, 44) sunk laterally into a bung casing is optionally provided in the barrel lid (12),
**characterized in that**
- immediately behind the lid rim (16) which is overlapped by the upper arm of the clamping-ring closure (14), the barrel lid (12) is provided with a continuous, substantially V-shaped engaging groove (32) - reduced downwards into the barrel body (20) - with a flat bottom (48) between a central lid disc (80) of reduced diameter and the lid rim (16),
- the inner boundary of the engaging groove (32) is formed by a ring part (52) which extends obliquely upwards in a conical manner and to which the flat lid disc is attached,
- the outline of the recess (22) extends outwards in a substantially flat-conical manner downwards towards the transition (24) into the completely cylindrical part of the barrel wall, wherein
- the transition (24) from the conical area into the completely cylindrical part of the barrel body (20) is situated at a distance of from 80 mm to 140 mm, preferably about 120 mm, from the upper front edge of the rim (28) of the barrel mouth, and wherein
- the upper rim (28) of the barrel mouth is made solid as an abutment and a sealing face for the lid seal (30) and has a width (thickness) of at least double the wall thickness of the barrel body (20), wherein a continuous flange rim (40) with a radial extension of from about 3 to 5 mm is additionally formed on the outside of the barrel rim, as a result of which the width of the horizontal abutment face (18) is enlarged for the lower arm of the clamping ring (14).

2. A barrel with a lid according to Claim 1, **characterized in that** the conical outline of the barrel wall inside the recess (22) below the horizontal abutment face (18) for the lower arm of the clamping-ring closure (14) towards the transition (24) into the completely cylindrical part (26) of the barrel body (20) is made at an acute angle of between 15° and 30°, preferably about 18° to 20°, to the longitudinal axis of the barrel.

3. A barrel with a lid according to Claim 1 or 2, **characterized in that** the radial depth of the recess (22), measured from the extension line of the completely cylindrical part (26) of the barrel body (20), is between 12 mm and 25 mm, preferably about 17 mm.

4. A barrel with a lid according to Claim 1, 2 or 3, **characterized in that** the barrel edge (18), which extends slightly obliquely and is used as an abutment face for the lower arm of the clamping ring (14) and which at the same time forms the upper boundary of the recess (22), is formed at a distance of about 10 mm to 20 mm, preferably about 15 mm, from the upper barrel rim (28) in the outer wall of the barrel body (20).

5. A barrel with a lid according to Claim 1, 2, 3 or 4, **characterized in that** the upwardly directed surface of the solid rim (28) of the barrel mouth or of the vertical arm (90) has a smooth, partially circular cross-section as a sealing surface for the lid seal (30).

6. A barrel with a lid according to Claim 1, 2, 3, 4 or 5, **characterized in that** the solid rim (28) of the barrel mouth is produced during blow-moulding by upsetting the thermoplastically deformable plastic material of the barrel wall by means of mould slides.

7. A barrel with a lid according to Claim 1, 2, 3, 4, 5 or 6, **characterized in that** the barrel body (20) is provided at the bottom - in the transition area from the cylindrical barrel wall into the barrel bottom (34) - with a continuous, solid bottom rolling ring (36) with a trapezoidal cross-section at the bottom and a thin web attachment to the barrel body (20), wherein the bottom rolling ring (36) has almost exactly the same external diameter as the clamping ring (14) fitted in the closed state.

8. A barrel with a lid according to Claim 1, 2, 3, 4, 5, 6 or 7, **characterized in that** when the barrel lid (12) and the clamping-ring closure (14) are fitted it has a height/diameter ratio of about 1.57 for a capacity of about 30 US gallons (about 113.6 litres).

9. A barrel with a lid according to one of the preceding Claims 1 to 7, **characterized in that** when the barrel lid (12) and the clamping-ring closure (14) are fitted it has a height/diameter ratio of about 1.82 for a capacity of about 35 US gallons (about 132.5 litres).

10. A barrel with a lid according to one of the preceding Claims 1 to 9, **characterized in that** all diameter dimensions for a 30-US-gallon barrel (about 113.6 litres) are the same as for a 35-US-gallon barrel (about 132.5 litres), wherein the maximum barrel diameter in the area of the two barrel-body rolling rings (38), arranged in the completely cylindrical part (26) of the barrel wall, is about 474 mm.

11. A barrel with a lid according to Claim 1, 2, 3, 4, 5, 6 or 7, **characterized in that** when the barrel lid (12) and the clamping-ring closure (14) are fitted it has a height/diameter ratio of about 1.06 for a capacity of about 36 US gallons (about 136.3 litres).

12. A barrel with a lid according to Claim 1, 2, 3, 4, 5, 6 or 7, **characterized in that** when the barrel lid (12) and the clamping-ring closure (14) are fitted it has a height/diameter ratio of about 1.49 for a capacity of about 52.5 US gallons (about 198.7 litres).

13. A barrel with a lid according to at least one of the preceding Claims 1 to 7, **characterized in that** when the barrel lid (12) and the clamping-ring closure (14) are fitted it has a height/diameter ratio of about 1.55 for a capacity of about 55 US gallons (about 208.2 litres).

14. A barrel with a lid according to at least one of the preceding Claims 1 to 7, **characterized in that** all diameter dimensions for a 36-US-gallon barrel (about 136.3 litres) are the same as for a 52.5- or 55-US-gallon barrel (about 198.7 or about 208.2 litres), wherein the maximum barrel diameter in the area of the two barrel-body rolling rings (38), arranged in the completely cylindrical part (26) of the barrel wall, or in the area of the clamping ring (14) and the bottom rolling ring (36), is about 474 mm.

15. A barrel with a lid according to at least one of the preceding Claims 1 to 13, **characterized in that** the completely cylindrical part (26) of the barrel body (20) is at least three quarters of the overall height of the barrel (10) with a lid.

16. A barrel with a lid according to at least one of the preceding Claims 1 to 15, **characterized in that** the conical outline of the barrel wall inside the lower recess above the bottom rolling ring (36) to the transition upwards into the completely cylindrical part (26) of the barrel body (20) is made at an acute angle of between 15° and 30°, preferably about 18° to 20°.

17. A barrel with a lid according to at least one of the preceding Claims 1 to 16, **characterized in that** the upper plate of the barrel lid (12) is made laterally symmetrical on both sides and inclined adjacent to the bung (42) or the bung casing (50), wherein the inclination (68) of the raised central disc-shaped lid part extends on the outside as far as the projection or beginning of an inner annular web (56) or as far as the inner flat rim of the engaging groove (32).

18. A barrel with a lid according to at least one of the preceding Claims 1 to 17, **characterized in that** two mutually spaced annular flanges (54, 56) are formed on the underside of the barrel lid (12) in the outer area thereof, wherein the distance therebetween is from about 10 mm to 30 mm, preferably about 18 mm, and the axial extension of the annular flanges (54, 56) into the barrel body (20) is likewise about from 10 mm to 30 mm, preferably about 18 mm.

19. A barrel with a lid according to Claim 18, **characterized in that** a bore (76) is formed in the inner annular flange (56) and/or in the outer annular flange (54) directly in front of the discharge bung (42).

20. A barrel with a lid according to Claim 19, **characterized in that** the bores (76) extend through the annular flanges (54, 56) obliquely to the bung (42), namely with a steeper slope to the bung than the inclination (68), so that the lowest point (78) is produced in the upside-down draining position at the outer edge of the bunghole.

21. A barrel with a lid according to at least one of the preceding Claims 1 to 20, **characterized in that** a groove-like depression (74), which extends radially obliquely downwards to the bunghole and in which the bore (76) - leading to the bunghole - through the inner annular flange (56) is provided, is formed on the inside as a drainage channel directly in front of the bung (42) as viewed in the upside-down draining position.

## Revendications

1. Tonneau à couvercle cylindrique (10), fabriqué par un procédé de moulage par soufflage, comportant un couvercle (12) et une fermeture par anneau tendeur (14) de section transversale en forme de U; après fermeture, la branche supérieure de l'anneau tendeur (14) est engagée par dessus le bord extérieur (16) du couvercle tandis que sa branche inférieure s'engage dans un enfoncement (22) prévu dans la partie supérieure de la paroi (le corps) du tonneau immédiatement en dessous du bord supérieur (28) du tonneau, ou s'engage sous un rebord sensiblement horizontal du tonneau ou sous une surface d'appui (18) légèrement inclinée constituant la délimitation supérieure de l'enfoncement (22) qui s'élargit de manière conique jusqu'à l'endroit de transition (24) vers la partie cylindrique proprement dite du corps du tonneau; le bord extérieur (16) du couvercle par dessus duquel est engagé l'anneau tendeur (14) présente une section transversale avec un U ouvert vers le bas, dans lequel est posé ou expansé un élément d'étanchéité (30) du couvercle destiné à venir au contact étanche du bord supérieur légèrement élargi de l'ouverture du tonneau; le couvercle (12) est pourvu le cas échéant d'au moins une bonde latérale (42), (44) disposée dans un logement de bonde, *caractérisé en ce que*
• le couvercle (12) comporte une gorge (32) en forme de V à fond (48) plat, qui est continue sur tout le pourtour du couvercle, qui pénètre dans le corps du tonneau et qui est disposée immédiatement derrière le bord extérieur (16) du couvercle sur lequel est engagée la branche supérieure de l'anneau tendeur (14), entre ledit bord extérieur (16) du couvercle et un disque central de couvercle de diamètre réduit par rapport au diamètre total du couvercle,
• la délimitation intérieure de la gorge (32) est constituée d'une paroi annulaire (52) inclinée de manière conique vers le haut et se prolongeant par le disque central plat du couvercle,
• l'enfoncement (22) s'élargit de manière conique jusqu'à l'endroit de transition (24) vers la partie cylindrique proprement dite du corps du tonneau,
• la transition (24) entre la partie conique et la partie cylindrique du corps du tonneau (20) est prévue à une distance d'environ 80 mm à 140 mm, de préférence d'environ 120 mm, en dessous de l'arête du bord supérieur (28) de l'ouverture du tonneau,
• le bord supérieur (28) du tonneau, qui constitue une contrebutée et une surface d'appui pour l'élément d'étanchéité (30) du couvercle, est de construction massive et possède une largeur (épaisseur) qui est au moins le double de l'épaisseur de la paroi ou corps (20) du tonneau,
• un rebord saillant (40) continu est prévu en outre sur tout le pourtour du tonneau, la largeur du rebord saillant radialement étant d'environ 3 mm à 5 mm, ce qui agrandit la largeur de la surface d'appui horizontale (18) sur laquelle s'appuie la branche inférieure de l'anneau tendeur (14).

2. Tonneau à couvercle selon la revendication 1, *caractérisé en ce que* la partie de la paroi du tonneau qui est située dans l'enfoncement (22) en dessous de la surface d'appui horizontale (18) destinée à coopérer avec l'anneau tendeur (14), et qui s'étend jusqu'à l'endroit de transition (24) vers la partie cylindrique proprement dite (26) du corps du tonneau (20), présente une inclinaison comprise entre 15° et 30°, de préférence d'environ 18° à 20°, sur l'axe longitudinal du tonneau.

3. Tonneau à couvercle selon les revendications 1 ou 2 *caractérisé en ce que* la profondeur radiale de l'enfoncement (22), mesurée depuis la ligne de prolongation de la partie cylindrique proprement dite (26) du corps (20) du tonneau, est comprise entre 12 mm et 25 mm, et est de préférence de 17 mm.

4. Tonneau à couvercle selon les revendications 1, 2 ou 3 *caractérisé en ce que* l'arête (18) légèrement inclinée qui sert de surface d'appui à la branche inférieure de l'anneau tendeur (14) et qui forme simultanément la délimitation supérieure de l'enfoncement (22), est formée sur la face extérieure du corps du tonneau et disposée à une distance d'environ 10 mm à 20 mm, de préférence de 15 mm, du bord supérieur (28).

5. Tonneau à couvercle selon les revendications 1, 2, 3 ou 4 *caractérisé en ce que* la zone du bord supérieur (28) massif de l'ouverture du tonneau qui est orientée vers le haut, respectivement la traverse verticale (90), présente une section transversale de forme de cercle partiel lisse et sert de surface d'appui étanche à l'élément d'étanchéité (30) du couvercle.

6. Tonneau à couvercle selon les revendications 1, 2, 3, 4 ou 5 *caractérisé en ce que* le bord supérieur massif (28) de l'ouverture du tonneau est fabriqué au cours du processus de moulage par soufflage par compression de la matière synthétique déformable de la paroi du tonneau, à l'aide d'un coulisseau du moule.

7. Tonneau à couvercle selon les revendications 1, 2, 3, 4, 5 ou 6 *caractérisé en ce que* le corps du tonneau (20) comporte dans sa zone inférieure de transition de la partie cylindrique proprement dite vers le fond inférieur (34) un cerceau (36) de roulage sur le sol, massif et continu sur tout le pourtour du tonneau, de section transversale en forme de trapèze et avec une traverse d'assemblage avec le corps du tonneau, le diamètre extérieur du cerceau de roulage (36) correspondant, après fermeture, approximativement au diamètre extérieur de l'anneau tendeur (14).

8. Tonneau à couvercle selon les revendications 1, 2, 3, 4, 5, 6 ou 7 *caractérisé en ce que* après mise en plase du couvercle (12) et de l'anneau tendeur (14), le rapport hauteur / diamètre d'un tonneau d'une contenance d'environ 30 gallons (environ 113,6 litres) est d'environ 1,57.

9. Tonneau à couvercle selon l'une des revendications 1 à 7 *caractérisé en ce que* après mise en plase du couvercle (12) et de l'anneau tendeur (14), le rapport hauteur / diamètre d'un tonneau d'une contenance d'environ 35 gallons (environ 132,5 litres) est d'environ 1,82.

10. Tonneau à couvercle selon l'une des revendications 1 à 9 *caractérisé en ce que* tous les diamètres d'un tonneau de 30 gallons (environ 113,6 litres) sont identiques à ceux d'un tonneau de 35 gallons (environ 132,5 litres), étant observé que le plus grand diamètre qui est situé dans la zone des deux cerceaux (38) disposés dans la zone cylindrique proprement dite (26) du corps du tonneau, mesure environ 474 mm.

11. Tonneau à couvercle selon l'une des revendications 1, 2, 3, 4, 5, 6 ou 7 *caractérisé en ce que* après mise en plase du couvercle (12) et de l'anneau tendeur (14), le rapport hauteur / diamètre d'un tonneau d'une contenance d'environ 36 gallons (environ 136,3 litres) est d'environ 1,06.

12. Tonneau à couvercle selon l'une des revendications 1, 2, 3, 4, 5, 6 ou 7 *caractérisé en ce que* après mise en plase du couvercle (12) et de l'anneau tendeur (14), le rapport hauteur / diamètre d'un tonneau d'une contenance d'environ 52,5 gallons (environ 198,7 litres) est d'environ 1,49.

13. Tonneau à couvercle l'une des revendications 1 à 7 *caractérisé en ce que* après mise en plase du couvercle (12) et de l'anneau tendeur (14), le rapport hauteur / diamètre d'un tonneau d'une contenance d'environ 55 gallons (environ 208,2 litres) est d'environ 1,55.

14. Tonneau à couvercle selon au moins l'une des revendications 1 à 7 *caractérisé en ce que* tous les diamètres d'un tonneau de 36 gallons (environ 136,3 litres) sont identiques à ceux d'un tonneau de 52,5 gallons (environ 198,7 litres) ou d'un tonneau de 55 gallons (environ 208,2 litres), étant observé que le plus grand diamètre qui est situé dans la zone des deux cerceaux (38) disposés dans la zone cylindrique proprement dite (26) du corps du tonneau, respectivement dans la zone de l'anneau tendeur (14) et du cerceau de roulage (36) sur le sol, mesure environ 474 mm.

15. Tonneau à couvercle selon au moins une des revendications 1 à 13 *caractérisé en ce que* la partie cylindrique proprement dite (26) du corps (20) du tonneau s'étend sur au moins les trois quarts de la hauteur totale du tonneau à couvercle (10).

16. Tonneau à couvercle selon au moins une des revendications 1 à 15 *caractérisé en ce que* la partie de la paroi du tonneau située dans l'enfoncement inférieur, prévu au dessus du cerceau de roulage (36) sur le sol, qui s'étend vers le haut jusqu'à l'endroit de transition vers la partie cylindrique (26) proprement dite du corps du tonneau, présente une inclinaison comprise entre 15° et 30°, de préférence d'environ 18° à 20°.

17. Tonneau à couvercle selon au moins une des revendications 1 à 16 *caractérisé en ce que* le fond supérieur du couvercle (12) présente de part et d'autre et symétriquement, à côté de la bonde (42), respectivement du logement de bonde 50), une inclinaison (68) qui s'étend extérieurement depuis la partie centrale élevée en forme de disque jusqu'au commencement d'un rebord intérieur annulaire (56), respectivement jusqu'au bord intérieur plat de la gorge (32).

18. Tonneau à couvercle selon au moins une des revendications 1 à 17 *caractérisé en ce que* sur la face inférieure du couvercle (12) et dans la zone extérieure de celui-ci, sont prévus deux rebords annulaires (54), (56) qui sont disposés à une certaine distance l'un de l'autre, ladite distance étant d'environ 10 mm à 30 mm, de préférence d'environ 18 mm, et qui pénètrent dans le corps du tonneau, la profondeur axiale de pénétration dans le corps du tonneau étant également d'environ 10 mm à 30 mm, de préférence d'environ 18 mm.

19. Tonneau à couvercle selon la revendication 18 18 *caractérisé par* un alésage (76) prévu directement devant la bonde (42) et ménagé dans du rebord annulaire intérieur (56) et / ou le rebord annulaire extérieur (54).

20. Tonneau à couvercle selon la revendication 19 *caractérisé en ce que* les alésages (76) à travers les rebords annulaires (54), (56) sont inclinés vers la bonde (42), l'inclinaison desdits alésages étant plus forte que l'inclinaison (68) de sorte que le point le plus bas (78) se situe sur bord extérieur du trou de bonde lorsque le tonneau est en position renversée de vidange.

21. Tonneau à couvercle selon au moins une des revendications 1 à 20 *caractérisé par* une rainure (74) servant de canal de drainage qui, en position renversée de vidange du tonneau, se trouve du côté intérieur directement devant la bonde (42), est inclinée et s'étend vers le bas jusqu'à la bonde, l'alésage (76) qui traverse le rebord annulaire intérieur (56) et conduit jusqu'à la bonde étant ménagé dans ladite rainure (74).
